# EUROPÄISCHE PATENTANMELDUNG

(11) **EP 4 568 071 A1**
(43) Veröffentlichungstag der Anmeldung: **11.06.2025**
(21) Anmeldenummer: 23215157.1
(22) Anmeldetag: 08.12.2023
(51) Int. Cl.: H02K 3/34, H02K 3/48, H02K 3/487, H02K 15/00, H02K 15/06, H02K 15/10, H02K 15/12, H02K 7/18, H02K 3/52

(54) **WINDENERGIEANLAGENGENERATORSTATOR FÜR EINE WINDENERGIEANLAGE MIT FORMSPULEN SOWIE EIN VERFAHREN ZUM HERSTELLEN EINES WINDENERGIEANLAGENGENERATORSTATORS**

(71) Anmelder: Wobben Properties GmbH, 26607 Aurich (DE)
(72) Erfinder: MUIK, Tobias, 64625 Bensheim (DE); VIHRIÄLÄ, Harri, 28865 Lilienthal (DE); KARAPANAHALLI, Charan, 69502 Hemsbach (DE); JÖCKEL, Stephan, 67259 Kleinniedesheim (DE); FEITH, Manuel, 26427 Esens (DE); DE BUHR, Renke, 26603 Aurich (DE)
(74) Vertreter: Eisenführ Speiser

(57) **Zusammenfassung**

Die Erfindung betrifft einen Windenergieanlagengeneratorstator (10) mit mehreren, insbesondere umlaufend abwechselnd, angeordneten Statorzähnen (14) und Statornuten (16) und mehreren in die Statornuten (16) eingesetzten Formspulen (40). Jede Formspule (40) umfasst eine Teilwicklung (48), die aus mehreren Windungen (46a, 46b, 46c) besteht, wobei die Windungen (46a, 46b, 46c) vor dem Einsetzen in die Statornut (16) aus mindestens einem elektrischen Leiter (45) derart gewickelt sind, dass die Teilwicklung (48) aus an zwei gegenüberliegenden Enden der Teilwicklung (48) angeordneten Wickelköpfen (42) und zwei im Wesentlichen parallel verlaufenden Schenkeln (44) gebildet ist. In mindestens einer Statornut (16) sind zwei Schenkel (44) unterschiedlicher Formspulen (40) derart eingesetzt, dass Außenseiten (54) der Schenkel (44) einander zugewandt und Innenseiten (52) der Schenkel (44) jeweils einem unterschiedlichen der beiden die Statornut (16) begrenzenden Statorzähnen (14) zugewandt sind. Zwischen den Außenseiten (54) der Schenkel (44) ist ein Keil (60) eingepresst, so dass mit dem Keil (60) auf jeden Schenkel (44) jeweils eine Kraft auf die Außenseite (54) des jeweiligen Schenkels (44) ausgeübt wird.

Die Erfindung betrifft ferner ein Verfahren zum Herstellen eines Windenergieanlagengeneratorstators (10), einen Windenergieanlagengenerator mit einem Windenergieanlagengeneratorstator (10) und eine Windenergieanlage (100) mit einem Windenergieanlagengenerator oder einem Windenergieanlagengeneratorstator (10).

## Beschreibung

Die Erfindung betrifft den Bereich von Windenergieanlagen und hierbei insbesondere Windenergieanlagengeneratoren. Ein Windenergieanlagengenerator entspricht dem Generator einer Windenergieanlage, der angetrieben durch einen aerodynamischen Rotor der Windenergieanlage kinetische Energie des Windes in elektrische Energie wandelt.

Windenergieanlagengeneratoren weisen einen Windenergieanlagengeneratorstator, also einen Stator eines Windenergieanlagengenerators, und einen Windenergieanlagengeneratorrotor, also einen Rotor eines Windenergieanlagengenerators, auf. Der Windenergieanlagengeneratorrotor wird durch einen aerodynamischen Rotor mit Rotorblättern angetrieben und rotiert somit gegenüber dem Windenergieanlagengeneratorstator. Mit dem Rotor des Windenergieanlagengenerators wird ein rotierendes Magnetfeld bereitgestellt, das durch Rotation des Rotors einen elektrischen Strom in eine aus elektrischen Leitern bestehende Wicklung des Windenergieanlagengeneratorstators induziert, um so elektrische Energie aus der Rotationsenergie zu erzeugen.

Die Erfindung betrifft insbesondere Windenergieanlagengeneratorstatoren mit einer Wicklung, die aus Formspulen gebildet ist. Formspulen sind vorgeformte Abschnitte der Wicklung, also Wicklungsabschnitte, bei denen mindestens ein Leiter, meist mit rechteckigem oder quadratischem Querschnitt, in mehreren Windungen vor dem Anordnen im Stator gewickelt wird. Die Formspule weist nach dem Wickeln und weiteren Prozessschritten eine im wesentlichen stabile Form auf, so dass sie im Wesentlichen ohne weitere Formanpassung in Statornuten des Windenergieanlagengeneratorstators eingelegt wird.

Demnach unterscheidet sich eine Wicklung aus Formspulen von einer Drahtwicklung, bei der die Wicklung durch Wickeln eines Drahts um nutenbegrenzende Zähne hergestellt wird. Formspulen ermöglichen eine höhere Leistungsdichte durch einen höheren Füllfaktor der Statornuten.

Aufgrund des erhöhten Füllfaktors der Statornuten, der durch die Verwendung von Formspulen möglich ist, entstehen durch den in den Formspulen fließenden Strom, der durch einen Widerstand der Formspulen in Wärme gewandelt wird, Temperaturen im Windenergieanlagengeneratorstator, die höher sind als bei Drahtwicklungen. Grund ist die vergleichsweise höhere Stromdichte in der Nut bei Verwendung der Formspulen. Die hohen Temperaturen können zu einer Beschädigung der Isolierung der Formspulen und somit zu Erdschlüssen während des Betriebs führen.

Es werden daher unterschiedliche Maßnahmen getroffen, um eine Kühlung der Spulen, beispielsweise durch aktive oder passive Belüftung, zu erreichen und/oder die Isolierung wärmeresistent auszulegen. Diese Maßnahmen sind häufig sehr aufwendig und insbesondere eine Kühlung im Bereich der dicht gepackten Statornuten ist aufgrund der geringen für die Kühlung erreichbaren Oberfläche ineffizient.

Aufgabe der vorliegenden Erfindung ist es daher den Problemen des Standes der Technik zu begegnen. Insbesondere soll eine effiziente Maßnahme gefunden werden, um eine Wärmeentwicklung in einem Windenergieanlagengeneratorstator, insbesondere von einem großen Windenergieanlagengenerator mit beispielsweise mehr als 5 m oder mehr als 10 m Luftspaltdurchmesser und mehr als 1 MW Nennleistung, dessen Wicklung mit Formspulen hergestellt ist, zu verbessern. Jedenfalls soll eine Alternative zum aus dem Stand der Technik Bekannten gefunden werden.

Hierzu betrifft die Erfindung einen Windenergieanlagengeneratorstator nach Anspruch 1.

Demnach wird ein Windenergieanlagengeneratorstator vorgeschlagen, der mehrere Statorzähne und Statornuten aufweist, wobei die Statorzähne und Statornuten vorzugsweise abwechselnd zueinander angeordnet sind. Der Windenergieanlagengeneratorstator ist vorzugsweise als ein Windenergieanlagengeneratorstator für einen Windenergieanlagengenerator mit einem Außenläufer oder Außenrotor ausgebildet. Die Statornuten und Statorzähne sind demnach vorzugsweise am äußeren Umfang des Windenergieanlagengeneratorstators gebildet.

Ferner weist der Windenergieanlagengeneratorstator mehrere Formspulen auf, wobei jede Formspule einer Teilwicklung einer Wicklung des Windenergieanlagengeneratorstators entspricht. Eine Teilwicklung umfasst mehrere aus mindestens einem Leiter gebildete Windungen. Die Formspulen sind in die Statornuten eingesetzt. Die Formspulen sind derart aus dem Leiter gewickelt, dass die Teilwicklung, also die Formspule, aus zwei an gegenüberliegenden Enden der Teilwicklung angeordneten Wickelköpfen und zwei im Wesentlichen parallel verlaufenden Schenkeln gebildet ist.

In mindestens einer Statornut sind zwei Schenkel unterschiedlicher Formspulen eingesetzt. Jeder der Schenkel weist eine Außenseite und eine Innenseite auf. Als Außenseite des Schenkels wird vorzugsweise eine Fläche des Schenkels einer Formspule bezeichnet, die sich durch die Windungen des Leiters oder der nebeneinander angeordneten Leiter bildet, wenn diese mehrlagig übereinander angeordnet sind. Ein Schenkel weist durch die mehreren Lagen somit eine Außenseite auf, die von einem Massenschwerpunkt der Formspule weg zeigt. Entsprechend wird vorzugsweise eine Innenseite eines Schenkels der Formspule als die Fläche bezeichnet, die sich durch die mehreren übereinander angeordneten Lagen des Leiters oder der Leiter bildet und dessen Flächen zum Massenschwerpunkt oder Massenmittelpunkt der Formspule hin zeigt. Seitenflächen, die die Innenseite und Außenseite eines Schenkels verbinden, entsprechen einer Breite des Leiters oder der Summe der Breiten der nebeneinanderliegenden Leiter und werden durch den oder die oberen bzw. den oder die unteren Leiter der mehrlagigen Anordnung gebildet. Der oder die Leiter ist bzw. sind bevorzugt Rechteckleiter, also Leiter mit quadratischem oder rechteckigem Querschnitt, so dass durch die mehrlagige Anordnung die Flächen durch die Kanten des Leiters oder der Leiter gebildet werden.

Die Schenkel der beiden unterschiedlichen Formspulen sind derart in eine Statornut eingesetzt, dass die Außenseiten der beiden eingesetzten Schenkel einander zugewandt sind. Die Innenseiten der Schenkel sind jeweils einem unterschiedlichen von zwei die Statornut begrenzenden Statorzähnen zugewandt.

Erfindungsgemäß ist zwischen den Außenseiten der Schenkel ein Keil eingepresst, so dass auf jeden der Schenkel jeweils eine Kraft auf die Außenseite des jeweiligen Schenkels ausgeübt wird. Der Begriff Keil wird hier für einen Körper verwendet, der zwei Seitenflächen umfasst, die unter einem spitzen Winkel zusammenlaufen und der vorzugsweise gleichschenklig ausgebildet ist. Unter den Begriff Keil fallen jedoch auch Körper mit einem Querschnitt, der trapezförmig, insbesondere gleichschenklig trapezförmig, ist und die beispielsweise als Trapezprisma oder Trapezoeder bezeichnet werden.

Vorzugsweise ist der Keil derart angepasst, dass dieser im Wesentlichen entlang der gesamten Tiefe der Statornut oder zumindest in einem überwiegenden Teil der Tiefe der Statornut mit seiner Höhe oder Breite verläuft und so auf beide Außenseiten der Schenkel eine im Wesentlichen gleich verteilte Kraft ausübt. Als Höhe oder Breite des Keils wird der Abstand der die Seitenflächen verbindenden Flächen, die im Wesentlichen parallel zueinander verlaufen, bezeichnet. Der Keil ist somit bezüglich seiner Form an die Tiefe der Statornut, die Außenseiten der Schenkel sowie eine Lücke zwischen den Schenkeln, die ohne den Keil vorhanden wäre, angepasst, um diese Lücke im Wesentlichen gleichmäßig und vollständig zu füllen und zusätzlich die Kräfte auf die Außenseiten auszuüben.

Der Erfindung liegt die Erkenntnis zugrunde, dass bisherige Windenergieanlagengeneratorstatoren, also ohne die erfindungsgemäße Lösung, auch eine hohe Wärmeentwicklung deswegen aufweisen, da der Kontakt zwischen den Schenkeln der Formspulen und den Statorzähnen teilweise unzureichend ist, um Wärme von den Formspulen über die Statorzähne abzuleiten. Formspulen werden beispielsweise durch Tränken des Windenergieanlagengeneratorstators in ein Harz und/oder ein Nutverschlusselement an ihrer Position gehalten, nachdem sie zuvor ohne mechanische Vorspannung über die Statorzähne in die Statornuten eingeführt werden. Harz oder Luft konnte bislang somit zwischen der Innenseite der Schenkel und dem Statorzahn vorhanden sein, so dass eine Ableitung von Wärme aus dem Schenkel in den Statorzahn nicht ideal stattfinden konnte.

Durch den erfindungsgemäßen Keil wird nun der Schenkel jeder der in die Statornut eingesetzten Formspulen nach dem Einsetzen der Formspulen gegen den Statorzahn gedrückt, so dass ein im Wesentlichen idealer, insbesondere über die gesamte Fläche des Statorzahns verlaufender, Kontakt zwischen den Schenkeln der Formspulen und den entsprechenden Statorzähnen, besteht. Eine verbesserte Wärmeableitung ist somit möglich, so dass lediglich durch Einpressen des Keils, also mit vergleichsweise geringem Aufwand, eine sehr hohe Reduzierung der Wärmeentwicklung im Bereich der Formspule erfolgt.

Gemäß einer ersten Ausführungsform ist der Keil aus einem Kunststoff. Besonders bevorzugt ist der Keil aus einem glasfaserverstärktem Kunststoff (GFK) hergestellt. Durch die Herstellung des Keils aus Kunststoff, insbesondere aus glasfaserverstärktem Kunststoff, ist dieser formstabil und nichtleitend ausgebildet. Außerdem hat Kunststoff und insbesondere glasfaserverstärkter Kunststoff eine hohe elastische Energieaufnahme bei relativ niedrigem Elastizitätsmodul, so dass kontinuierlich eine Kraft nach dem Einpressen auf die Schenkel der Formspulen ausgeübt wird.

Gemäß einer weiteren Ausführungsform ist ein Gewebe oder ein Vlies zwischen dem Keil und den Schenkeln der Formspulen, also insbesondere den Außenseiten der Schenkel, angeordnet. Vlies bezeichnet hier die Kurzform eines Vliesstoffes. Das Gewebe oder Vlies ist beispielsweise ein Gewebe oder Vlies aus Polyethylenterephthalat, kurz PET genannt, und entspricht somit beispielsweise einem PET-Gewebe, PET-Filz oder PET-Vlies. Bevorzugt ist das Gewebe oder Vlies mit Glasfasern gebildet und somit ein Glas-Gewebe oder Glas-Vlies. Durch Bereitstellen eines Gewebes oder Vlieses, insbesondere flächenhaft, also gleichmäßig verteilt, mit einer gleichmäßigen Schichtdicke, beispielsweise zwischen 0,1 mm und 0,5 mm, zwischen dem Keil und den Schenkeln der Formspulen, wird der Reibungswiderstand erhöht.

Der Erfindung liegt die Erkenntnis zugrunde, dass Kunststoff oder glasfaserverstärkter Kunststoff üblicherweise einen geringen Reibungswiderstand aufweist. Durch Einfügen des Gewebes oder des Vlieses zwischen den Keil und die Schenkel wird der Reibungswiderstand, der von Gewebe oder Vlies vergleichsweise höher ist, erhöht und der Keil bleibt sicherer zwischen die Schenkel der Formspulen in der Statornut eingepresst. Die Verwendung von PET-Gewebe, PET-Vlies, Glas-Gewebe oder Glas-Vlies ist besonders vorteilhaft, da dieses günstig und mit hohem Reibungswiderstand bereitstellbar ist.

Gemäß einer weiteren Ausführungsform ist zwischen beiden Schenkeln der Formspulen und einer Nutwandung der Statornut ebenfalls ein Gewebe oder Vlies, das vorzugsweise dem Gewebe oder dem Vlies zwischen den Schenkeln und dem Keil oder einem Glas- oder PET-Gewebe oder Glas- oder PET-Vlies entspricht, eingesetzt. Der Reibungswiderstand zwischen den Formspulen und den die Statornut begrenzenden Statorzähnen, die zusammen mit einem Nutgrund die Nutwandung bilden, kann somit ebenfalls erhöht werden, so dass der Halt der Formspulen in den Statornuten verbessert wird.

Gemäß einer weiteren Ausführungsform ist das Gewebe oder Vlies, nämlich das Gewebe oder Vlies zwischen dem Keil und den Schenkeln und/oder zwischen beiden Schenkeln und einer Nutwandung der Statornut, ein harzgetränktes Gewebe oder harzgetränktes Vlies und vorzugsweise ein harzgetränktes Glas-Vlies. Das harzgetränkte Gewebe oder harzgetränkte Vlies befindet sich je nachdem, ob der Windenergieanlagengeneratorstator bereits in einem Fertigungsschritt erwärmt wurde oder ob dieser noch auszuführen ist, in einem halbausgehärteten Zustand, vor dem Erwärmungsprozess, oder in einem vollausgehärteten Zustand, nach dem Erwärmungsprozess. Der Prozessschritt kann auch als Backen des Windenergieanlagengeneratorstators bezeichnet werden. Das harzgetränkte Gewebe oder harzgetränkte Vlies wird demnach vor dem Erwärmungsprozess als "B-Stage"-Gewebe oder -Vlies bezeichnet und nach dem Aushärten durch den Erwärmungsprozess als "C-Stage"-Gewebe oder -Vlies.

Durch Verwendung des harzgetränkten Gewebes oder harzgetränkten Vlies wird zusätzlich zur erhöhten Reibung zwischen Schenkeln der Formspule und Statorzähnen einerseits sowie Keil andererseits die Stabilität weiter erhöht. Insbesondere werden nämlich die Schenkel an den Statorzähnen und der Keil durch das ausgehärtete Harz an den Schenkeln verklebt. Ein sicherer Halt wird somit gewährleistet.

Gemäß einer weiteren Ausführungsform ist die Statornut mit einem Nutverschlusselement verschlossen. Das Nutverschlusselement, das auch Nutverschlusskeil genannt wird, wird im Eintrittsbereich in die Statornut durch den die Schenkel der Formspulen eingelegt werden, zwischen die Statorzähne eingelegt, eingepresst oder eingepasst, um die Statornut, insbesondere in radialer Richtung des Stators oder der Statornut, zu verschließen und somit die Formspulen noch sicherer in der Statornut zu halten.

Gemäß einer weiteren Ausführungsform ist das Nutverschlusselement aus einem Kunststoff, insbesondere einem glasfaserverstärkten Kunststoff, hergestellt. Vorzugweise entspricht das Material, aus dem das Nutverschlusselement hergestellt ist, dem Material, aus dem der Keil zwischen den Schenkeln der Formspulen hergestellt ist.

Aufgrund der hohen elastischen Energieaufnahme bei relativ niedrigem Elastizitätsmodul kann ein aus Kunststoff oder glasfaserverstärktem Kunststoff hergestelltes Nutverschlusselement fest in die Statornut eingesetzt werden und behält dort sicher seine Position.

Gemäß einer weiteren Ausführungsform ist ein Füllmaterial, beispielsweise ein Gewebe oder ein Vlies, zwischen dem Nutverschlusselement und den in die Statornut eingesetzten Formspulen und dem Keil angeordnet. Die Seitenflächen der Schenkel der Formspulen und eine Rückseite des Keils bilden eine Fläche der Nut, über der das Gewebe oder Vlies angeordnet wird. Das Gewebe oder Vlies ist dann zwischen der zuletzt genannten Fläche und dem Nutverschlusselement angeordnet, nachdem die Nut verschlossen wurde. Das Gewebe oder das Vlies dienen zum Erhöhen des Reibungswiderstands zwischen dem Nutverschlusselement und den Formspulen sowie dem Keil zwischen den Schenkeln der Formspulen, um das Nutverschlusselement sicher in Position zu halten. Vorzugsweise ist das Füllmaterial ein Kunststoffvlies, etwa ein Polyestervlies mit einer Dicke von vorzugsweise 1 mm bis 4 mm, besonders bevorzugt einer Dicke zwischen 2 mm und 3 mm. Das Füllmaterial ist vorzugsweise ebenfalls ein harzgetränktes Gewebe oder harzgetränktes Vlies, um im vorher genannten Erwärmungsprozess oder-verfahren das Nutverschlusselement fest zu verkleben. Das Verwenden des harzgetränkten Materials zur Verklebung wird auch als Resin-Ritch-Verfahren bezeichnet.

Ferner betrifft die Erfindung ein Verfahren. Das Verfahren dient zum Herstellen eines Windenergieanlagengeneratorstators nach einer der vorgenannten Ausführungsformen. In einem ersten Schritt des Verfahrens wird ein Windenergieanlagengeneratorjoch mit mehreren umlaufend angeordneten Statorzähnen und Statornuten bereitgestellt. In einem weiteren Schritt des Verfahrens werden in mindestens eine Statornut zwei Schenkel unterschiedlicher Formspulen derart eingesetzt, dass Außenseiten der Schenkel einander zugewandt und Innenseiten der Schenkel jeweils einem unterschiedlichen der beiden die Statornut begrenzenden Statorzähnen zugewandt sind. In einem weiteren Schritt wird ein Keil zwischen den Außenseiten der Schenkel eingepresst, so dass der Keil auf jeden der Schenkel jeweils eine Kraft auf die Außenseite des jeweiligen Schenkels ausübt.

Gemäß einer Ausführungsform des Verfahrens wird ein Gewebe oder ein Vlies vor dem Einlegen oder Einpressen des Keils in einen Bereich zwischen die Schenkel, nämlich insbesondere die Außenseiten der Schenkel, eingelegt oder am Keil angeordnet, so dass nach Einpressen des Keils zwischen dem Keil und den Außenseiten der Schenkel eine Schicht aus Gewebe oder Vlies angeordnet ist.

Gemäß einer weiteren Ausführungsform wird vor dem Einlegen der Schenkel in die Statornut ein Gewebe oder Vlies in die Statornut eingelegt, so dass das Gewebe oder Vlies, insbesondere eine Schicht aus Gewebe oder Vlies, zwischen einer Nutwandung und den Formspulen angeordnet ist.

Gemäß einer weiteren Ausführungsform wird vor dem Einlegen der Schenkel der Formspulen in die Statornut ein Gewebe oder Vlies in die Statornut eingelegt, wobei das Gewebe oder Vlies eine Breite aufweist, die vorzugsweise länger als die Breite der Statornut zuzüglich zweimal der Tiefe der Statornut ist. Besonders bevorzugt entspricht die Breite im Wesentlichen dem vierfachen der Nuttiefe zuzüglich dem zweifachen der Nutbreite. Nach Einlegen der Schenkel der Formspulen wird das Gewebe oder Vlies über jeweils beide der Schenkel der Formspulen gelegt und in einen Bereich zwischen den Schenkeln eingesteckt. Der Keil wird dann zusammen mit dem eingesteckten Vlies in den Bereich zwischen den Schenkeln in die Statornut eingepresst. Bevorzugt wird der Keil bündig mit Seitenflächen der Schenkel eingepresst und das Gewebe im Bereich der Seitenflächen der Schenkel, besonders bevorzugt durch Schneiden, entfernt, so dass das Gewebe zwischen Keil und Außenseiten der Schenkel sowie zwischen den Schenkeln und der Statornut angeordnet bleibt, und Normalenvektoren der Seitenflächen der Schenkel, die vom Nutgrund oder Nutboden wegzeigen, und Keil eine im Wesentlichen ebene Fläche bilden.

Gemäß einer weiteren Ausführungsform wird vor dem Einlegen der Schenkel der Formspule in die Statornut ein Gewebe oder Vlies in die Statornut eingelegt, wobei das Gewebe oder Vlies eine Breite aufweist, die vorzugsweise der Breite der Statornut zuzüglich zwei Mal der Tiefe der Statornut im Wesentlichen entspricht. Daraufhin werden die Schenkel der Formspulen in die Nut eingelegt.

Gemäß einer weiteren Ausführungsform wird nach dem Einlegen der Schenkel in die Statornut ein Gewebe oder Vlies derart bereitgestellt, dass dieses nach dem Einpressen des Keils zwischen dem Keil und den Schenkeln angeordnet ist. Hierzu wird das Gewebe oder Vlies entweder in den Bereich zwischen den Formspulen vor dem Einpressen des Keils gelegt oder um eine Kante oder Seite des Keils auf die beiden Seitenflächen um den Keil gelegt und zusammen mit dem Keil in den Bereich zwischen den Formspulen eingepresst.

Gemäß einerweiteren Ausführungsform wird ein Nutverschlusselement nach dem Einpressen des Keils zum Verschließen der Statornut in die Statornut eingepasst. Gemäß einer weiteren Ausführungsform wird vor dem Einpassen des Nutverschlusselements eine Schicht aus Füllmaterial, das insbesondere ein Kunststoff, wie beispielsweise ein Gewebe oder ein Vlies, ist, auf eine durch den Keil und Seitenflächen der Schenkel der Formspulen gebildete Fläche aufgebracht, so dass nach dem Einpassen des Nutverschlusselements zwischen der Fläche und dem Nutverschlusselement das Füllmaterial angeordnet ist.

Außerdem betrifft die Erfindung einen Windenergieanlagengenerator mit einem Windenergieanlagengeneratorstator nach einer der vorgenannten Ausführungsformen, der bevorzugt nach einem Verfahren gemäß einer der vorgenannten Ausführungsformen hergestellt ist.

Ferner betrifft die Erfindung eine Windenergieanlage mit einem Windenergieanlagengenerator gemäß der Erfindung oder einem Windenergieanlagengeneratorstator nach einer der vorgenannten Ausführungsformen, der insbesondere nach einem Verfahren gemäß einer der vorgenannten Ausführungsformen hergestellt ist.

Weitere Ausführungsformen ergeben sich anhand der in den Figuren näher erläuterten Ausführungsbeispiele. Hierbei zeigen:
- Fig. 1: eine Windenergieanlage,
- Fig. 2: einen Ausschnitt eines Windenergieanlagengeneratorstators,
- Fig. 3: eine Formspule,
- Fig. 4: eine Statornut des Windenergieanlagengeneratorstators mit Formspulenschenkeln,
- Fig. 5: Schritte des Verfahrens gemäß einem Ausführungsbeispiel,
- Fig. 6a - 6c: Darstellungen der Schritte des Verfahrens gemäß einer ersten Alternative und
- Fig. 7a - 7c: Darstellungen der Schritte des Verfahrens gemäß einer zweiten Alternative.

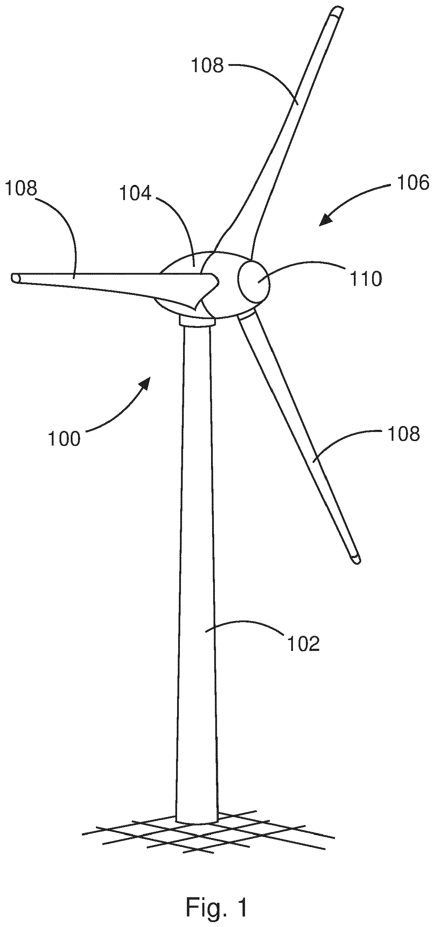

Fig. 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

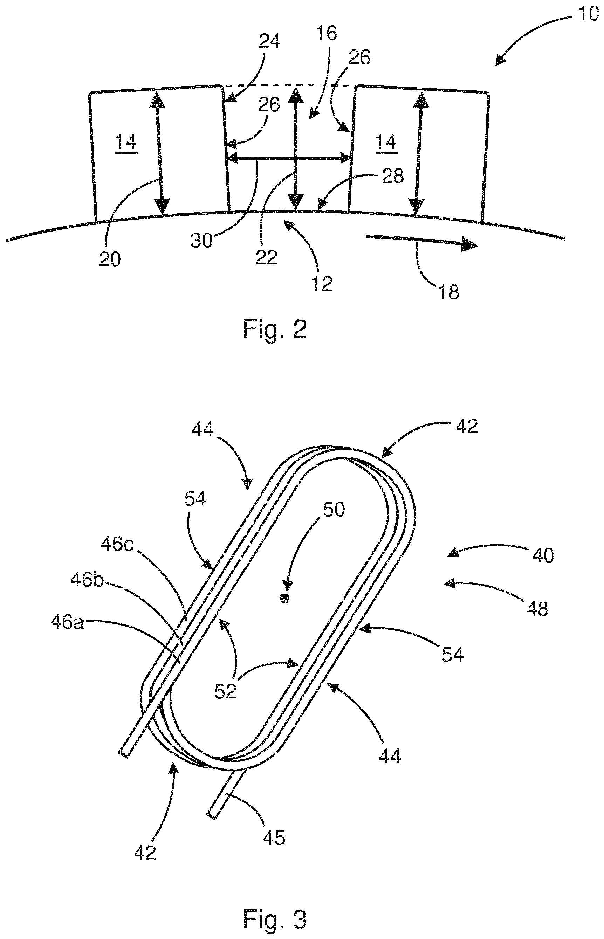

Fig. 2 zeigt einen Ausschnitt eines Windenergieanlagengeneratorstators 10 eines Windenergieanlagengenerators. Der Windenergieanlagengeneratorstator 10 weist ein Joch 12 auf, auf dem Statorzähne 14 und Statornuten 16 gebildet sind. In Umfangsrichtung 18 wechseln sich Statorzähne 14 und Statornuten 16 vorzugsweise umlaufend ab. Jeder Statorzahn 14 weist eine Höhe 20 auf, die gleichzeitig einer Tiefe 22 der Statornut 16 entspricht. Die Statornut 16 weist eine Wandung oder Nutwandung 24 auf, die zwei Seitenwände 26 aufweist, die durch die benachbarten Statorzähne 14 gebildet werden und somit gleichzeitig als Wandung des Statorzahns 14 bezeichnet werden können. Ferner weist die Statornut 16 einen Nutboden oder Nutgrund 28 auf, der ebenfalls Teil der Nutwandung 28 ist. Die Statornut 16 weist ferner eine Breite 30 auf, die vom Nutboden 28 entlang der Tiefe 22 der Statornut 16 durch eine gebogene Form des Jochs 12 zunimmt. Dies gilt hier, da sich die Erfindung vorzugsweise auf eine Windenergieanlage 100 bezieht, die einen Windenergieanlagengenerator aufweist, der als Außenläufer ausgebildet ist.
Fig. 3 zeigt eine Formspule 40, die zwei Wickelköpfe 42 und zwei Schenkel 44 aufweist. Die Formspule 40 ist aus einem elektrischen Leiter 45 hergestellt, der in mehreren Windungen 46a, 46b, 46c gewickelt ist, um so einer Teilwicklung 48 zum Herstellen einer gesamten Wicklung des Windenergieanlagengeneratorstators 10 zu entsprechen. Ausgehend von einem Massenschwerpunkt 50 der Formspule 40 weist die Formspule 40 eine Innenseite 52 und eine Außenseite 54 auf. Die Innenseite 52 und die Außenseite 54 sind vorzugsweise durch die gestapelten Windungen 46a, 46b, 46c des elektrischen Leiters 45, der also mehrlagig ist, gebildet. Die Formspule bildet so jeweils eine Fläche, die auf der Außenseite 54 sowie der Innenseite 52 im Wesentlichen eben ist, besonders bevorzugt durch eine nicht dargestellte Umwicklung der Lagen der Formspule 40. Die Umwicklung der Lagen der Formspule 40 kann auch als Hauptisolation bezeichnet werden und ist vorzugsweise aus Glimmermaterial hergestellt. Das Glimmermaterial ist vorzugsweise um den oder die gewickelten Leiter der Formspule geschlagen und ist ebenfalls harzgetränkt, so dass nach einem Erwärmungsprozess oder Backprozess die Umwicklung sicher an dem Leiter hält.

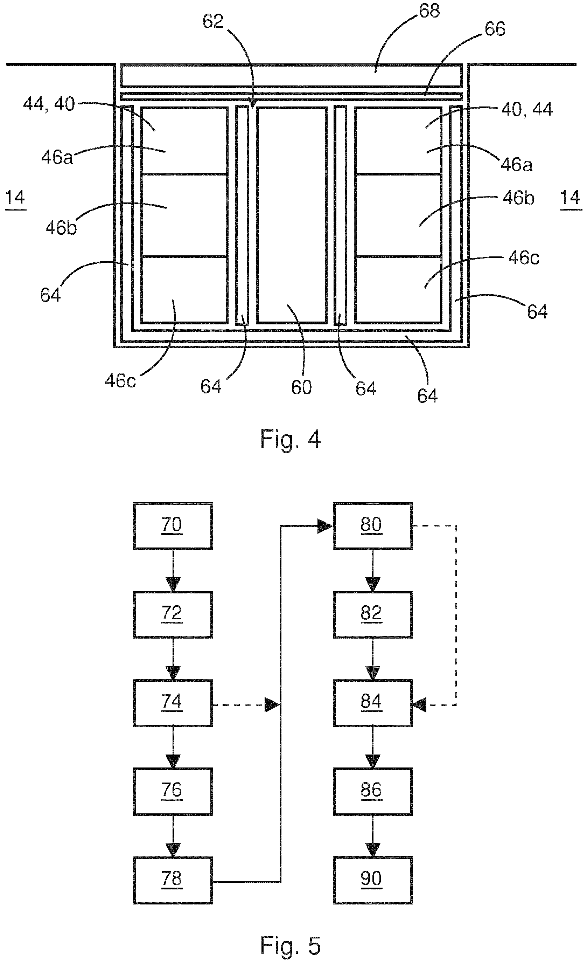

Fig. 4 zeigt schematisch eine Statornut 16 eines Windenergieanlagengeneratorstators 10, in den zwei Schenkel 44 unterschiedlicher Formspulen 40 eingesetzt sind. Die Darstellung ist schematisch und wenn von einem Windenergieanlagengeneratorstator 10 für einen Windenergieanlagengenerator ausgegangen wird, der einen Außenläufer aufweist, ist die Statornut 16 als V-förmig, wie in Fig. 2 dargestellt, zu betrachten. Ferner ist ein Keil 60 in einen Bereich 62 zwischen den Schenkeln 44 eingepresst. Entsprechend ist auch der Keil 60 nicht rechteckig, sondern als V-förmig oder trapezförmig anzusehen. Außerdem befindet sich ein Vlies 64 im Bereich zwischen den Schenkeln 44 und dem Nutboden 28 sowie den Seitenwänden 26 der Statornut 16. Das Vlies 64 ist außerdem zwischen den Innenseiten 52 der Schenkel 44 und dem Keil 60 angeordnet. Ein Füllmaterial 66 und ein Nutverschlusselement 68 verschließen die Statornut 16.
Fig. 5 zeigt die Schritte zum Herstellen eines Windenergieanlagengeneratorstators 10 gemäß einem Ausführungsbeispiel. In Schritt 70 wird zunächst ein Joch 12 eines Windenergieanlagengeneratorstators 10 bereitgestellt und im Schritt 72 ein Gewebe oder Vlies 64 in Statornuten 16 des Jochs 12 eingelegt. In Schritt 74 werden Formspulen 40 in die Statornuten 16 eingelegt. Im Schritt 76 wird überstehendes Gewebe oder Vlies 64 über die Schenkel 44 der Formspulen 40 in einen Zwischenraum, der sich zwischen eingelegten Schenkeln 44 unterschiedlicher Formspulen 40 in eine Statornut 16 bildet, gelegt und das Gewebe oder Vlies 64 in den Bereich zwischen den Schenkeln 44 im Schritt 78 eingeführt. Im Schritt 80 wird ein Keil 60 in den Bereich zwischen die Schenkel 44, die in einer Statornut 16 liegen, eingepresst und im Schritt 82 wird das an Seitenflächen 52, 54 der Schenkel 44 positionierte Gewebe oder Vlies 64 entfernt. Die Schritte 76 bis 82 entsprechen einer ersten Alternative, wobei gemäß einer zweiten Alternative im Schritt 74 das Gewebe oder Vlies passend eingelegt wird und nach Schritt 74 direkt Schritt 80 ausgeführt wird, wobei der Keil im Schritt 80 dann zusammen mit um den Keil gewickelten Gewebe oder Vlies in den Bereich zwischen den Schenkeln 44 eingepresst wird. Gemäß der zweiten Alternative entfällt Schritt 82. Im Schritt 84 wird ein Füllmaterial 66, beispielsweise ein weiteres Gewebe, über eine sich durch die Seiten 52, 54 der Schenkel 44 und den Keil 60 bildende Fläche gelegt und die Statornut 16 im Schritt 86 mit einem Nutverschlusselement 68 verschlossen. Im Schritt 90 wird der Windenergieanlagengeneratorstator 10 erwärmt oder gebacken.

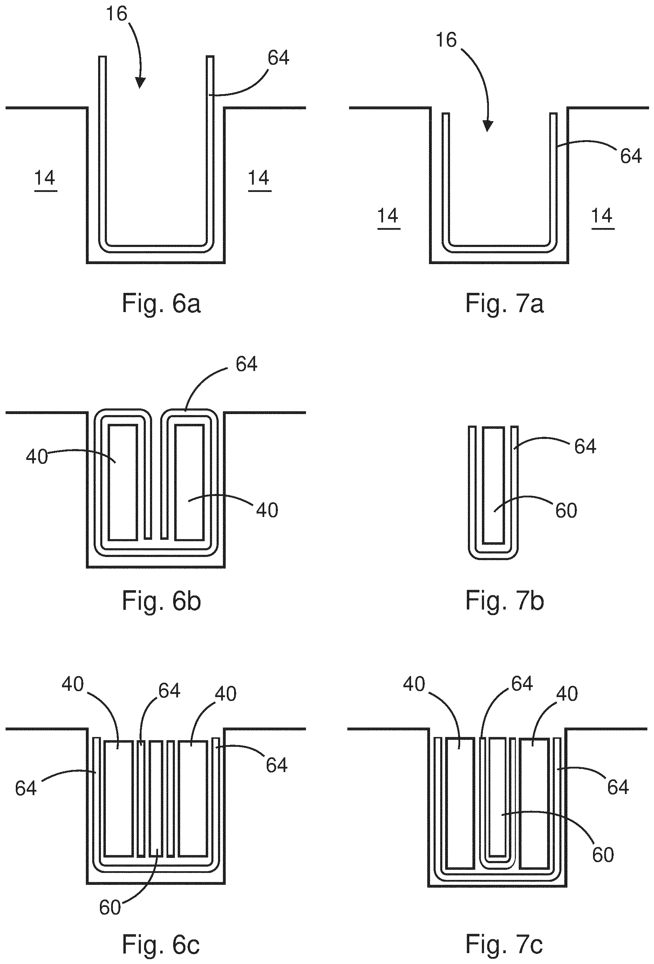

In Fig. 6a ist dargestellt, wie im Schritt 72 das Gewebe oder Vlies 64 in die Statornut 16 eingelegt ist. In Fig. 6b ist dargestellt, wie im Schritt 76 das Gewebe oder Vlies 64 nach dem Einlegen der Formspulen 40 über die Seiten 52, 54 der Schenkel 44 der Formspulen 40 gelegt und in den Bereich zwischen den Schenkeln 44 der Formspulen 40 eingeführt wird. In Fig. 6c ist dargestellt, wie nach Schritt 82 und nach eingelegtem Keil 60 im Schritt 80 das Gewebe im Bereich der Fläche, die sich durch die Seiten 52, 54 der Schenkel 44 der Formspulen 40 und den Keil 60 bildet, entfernt ist.
In Fig. 7a ist dargestellt, wie im Schritt 72 das Gewebe oder Vlies 64 in die Statornut 16 eingelegt ist, wobei hier das Gewebe oder Vlies 64 passend bündig oder leicht unterhalb der Statorzähne endet. In Fig. 7b ist dargestellt, wie der Keil 60 mit dem umwickelten Gewebe oder Vlies 64 bereitgestellt wird, um ihn dann im Schritt 80 zwischen die Formspulen einzupressen. In Fig. 7c ist dargestellt, wie nach Schritt 80 gemäß der zweiten zuvor genannten und mit Hinblick auf Fig. 5 beschriebenen Alternative das Gewebe oder Vlies 64 einerseits zwischen den Schenkeln der Formspulen 40 und den Statorzähnen und andererseits zwischen den Schenkeln 44 der Formspulen und dem Keil 60 angeordnet ist.

### Bezugszeichenliste

- 10: Windenergieanlagengeneratorstator
- 12: Joch
- 14: Statorzähne
- 16: Statornuten
- 18: Umfangsrichtung
- 20: Höhe
- 22: Tiefe
- 24: Nutwandung
- 26: Seitenwände
- 28: Nutgrund
- 30: Breite
- 40: Formspule
- 42: Wickelköpfe
- 44: Schenkel
- 45: elektrischer Leiter
- 46a: Windung
- 46b: Windung
- 46c: Windung
- 48: Teilwicklung
- 50: Massenschwerpunkt
- 52: Innenseiten
- 54: Außenseiten
- 60: Keil
- 62: Bereich
- 64: Vlies
- 66: Füllmaterial
- 68: Nutverschlusselement
- 70: Bereitstellen Joch
- 72: Einlegen Gewebe oder Vlies in Joch
- 74: Einlegen Formspulen
- 76: Einlegen Gewebe oder Vlies in einen Zwischenraum
- 78: Einführen Gewebe oder Vlies in den Bereich zwischen den Schenkeln
- 80: Einpressen Keil in den Bereich zwischen den Schenkeln
- 82: Entfernen Gewebe oder Vlies
- 84: Legen Füllmaterial
- 86: Verschließen Nut
- 90: Erwärmen oder Backen Windenergieanlagengeneratorstator
- 100: Windenergieanlage
- 102: Turm
- 104: Gondel
- 106: aerodynamischer Rotor
- 108: Rotorblätter
- 110: Spinner

## Patentansprüche

1. Windenergieanlagengeneratorstator (10) mit mehreren, insbesondere umlaufend abwechselnd, angeordneten Statorzähnen (14) und Statornuten (16) und mehreren in die Statornuten (16) eingesetzten Formspulen (40), wobei jede Formspule (40) eine Teilwicklung (48) umfasst, die aus mehreren Windungen (46a, 46b, 46c) besteht, wobei die Windungen (46a, 46b, 46c) vor dem Einsetzen in die Statornut (16) aus mindestens einem elektrischen Leiter (45) derart gewickelt sind, dass die Teilwicklung (48) aus an zwei gegenüberliegenden Enden der Teilwicklung (48) angeordneten Wickelköpfen (42) und zwei im Wesentlichen parallel verlaufenden Schenkeln (44) gebildet ist, und wobei in mindestens einer Statornut (16) zwei Schenkel (44) unterschiedlicher Formspulen (40) derart eingesetzt sind, dass Außenseiten (54) der Schenkel (44) einander zugewandt und Innenseiten (52) der Schenkel (44) jeweils einem unterschiedlichen der beiden die Statornut (16) begrenzenden Statorzähnen (14) zugewandt sind und zwischen den Außenseiten (54) der Schenkel (44) ein Keil (60) eingepresst ist, so dass mit dem Keil (60) auf jeden Schenkel (44) jeweils eine Kraft auf die Außenseite (54) des jeweiligen Schenkels (44) ausgeübt wird.

2. Windenergieanlagengeneratorstator (10) nach Anspruch 1, wobei der Keil (60) aus einem Kunststoff, insbesondere einem glasfaserverstärkten Kunststoff (GFK), besteht.

3. Windenergieanlagengeneratorstator (10) nach Anspruch 1 oder 2, wobei ein Gewebe oder Vlies (64), bevorzugt ein Glas- oder PET-Gewebe oder Glas- oder PET-Vlies, zwischen dem Keil (60) und den Schenkeln (44) angeordnet ist und/oder wobei ein Gewebe oder Vlies, bevorzugt ein Glas- oder PET-Gewebe oder Glas- oder PET-Vlies zwischen beiden Schenkeln (44) und einer Nutwandung (24) der Statornut (16) angeordnet ist.

4. Windenergieanlagengeneratorstator (10) nach Anspruch 3, wobei das Gewebe oder Vlies ein harzgetränktes Gewebe oder harzgetränktes Vlies, vorzugsweise ein harzgetränktes Glas-Vlies ist, das insbesondere vor dem Einlegen des Keils (60) und/oder der Schenkel (44) im halbausgehärteten Zustand vorliegt und durch einen Erwärmungsprozess des Windenergieanlagengeneratorstators (10) in einen vollausgehärteten Zustand überführbar ist oder überführt wurde.

5. Windenergieanlagengeneratorstator (10) nach einem der vorhergehenden Ansprüche, wobei die Statornut (16) mit einem Nutverschlusselement (68) verschlossen ist.

6. Windenergieanlagengeneratorstator (10) nach Anspruch 5, wobei das Nutverschlusselement (68) aus einem Kunststoff, insbesondere einem glasfaserverstärkten Kunststoff, besteht.

7. Windenergieanlagengeneratorstator (10) nach Anspruch 5 oder 6, wobei zwischen einer durch die Schenkel (44) der Formspulen (40) und den Keil (60) gebildeten Oberfläche und dem Nutverschlusselement ein Füllmaterial (66), insbesondere ein Gewebe oder Vlies (64), besonders bevorzugt ein Kunststoffvlies, angeordnet ist, wobei das Füllmaterial (66) vorzugsweise ein harzgetränktes Füllmaterial, vorzugsweise ein harzgetränktes Kunststoffvlies, ist.

8. Verfahren zum Herstellen eines Windenergieanlagengeneratorstators (10) nach einem der Ansprüche 1 bis 7, umfassend die Schritte:
- Bereitstellen (70) eines Windenergieanlagengeneratorstatorjochs (12) mit mehreren, insbesondere abwechselnd, angeordneten Statorzähnen (14) und Statornuten (16),
- Einlegen zweier Schenkel (44) unterschiedlicher Formspulen (40) in mindestens eine Statornut (16) und
- Einpressen (80) eines Keils (60) zwischen Außenseiten (54) der Schenkel (44) der Formspulen (40), die in einer Statornut (16) eingelegt sind, so dass auf jeden Schenkel (44) jeweils eine Kraft auf die Außenseite (54) des jeweiligen Schenkels (44) ausgeübt wird.

9. Verfahren nach Anspruch 8, wobei ein Gewebe oder Vlies (64) vor dem Einlegen der Schenkel (44) zwischen die Schenkel (44) und eine Nutwandung (24) der Statornut (16) in die Statornut (16) eingelegt wird und/oder ein oder das Gewebe oder Vlies (64) zwischen den Schenkeln (44) auf der Außenseite (54) der Schenkel (44) oder am Keil (60) angeordnet wird, so dass nach eingepresstem Keil (60) das Gewebe oder Vlies (64) zwischen den Außenseiten (54) der Schenkel (44) und dem Keil (60) angeordnet ist.

10. Verfahren nach Anspruch 9, wobei das Gewebe oder Vlies (64) zwischen Keil (60) und den Außenseiten (54) der Schenkel (44) eingelegt wird, indem
i) dieses zunächst vor dem Einsetzen der Formspulen (40) in die Statornut (16) eingelegt wird und nach dem Einsetzen der Formspulen (40) um die Formspulen (40) herum in einen Bereich zwischen die Schenkel (44) der Formspulen (40) umgelegt oder umgeklappt wird, bevor der Keil (60) eingepresst wird oder
ii) das Gewebe oder Vlies um eine Kante oder eine Seite des Keils (60), die nach dem Einsetzen zum Nutboden zeigt, über beide Seitenflächen gelegt wird, bevor der Keil eingepresst wird.

11. Verfahren nach Anspruch 10, wobei das Gewebe oder Vlies (64) im Bereich oder auf Seitenflächen der Schenkel (44), die oder deren Normalenvektoren vom Nutboden (28) weg zeigen, entfernt wird.

12. Verfahren nach einem der Ansprüche 8 bis 11, wobei die Statornut (16) mit einem Nutverschlusselement (68) verschlossen wird, nachdem die Formspulen (40) eingelegt und der Keil (60) eingepresst wurde, wobei vorzugsweise der Windenergieanlagengeneratorstator nach dem Einsetzen des Nutverschlusselements in die Nut erwärmt oder gebacken wird.

13. Verfahren nach Anspruch 12, wobei vor dem Verschließen der Statornut (16) mit dem Nutverschlusselement (68) ein Füllmaterial (66) zwischen einer durch die Schenkel (44) und den Keil (60) gebildeten Fläche und das Nutverschlusselement (68) eingebracht wird.

14. Windenergieanlagengenerator mit einem Windenergieanlagengeneratorstator (10) nach einem der Ansprüche 1 bis 7, der insbesondere nach einem Verfahren der Ansprüche 8 bis 13 hergestellt ist.

15. Windenergieanlage (100) mit einem Windenergieanlagengenerator nach Anspruch 14 oder einem Windenergieanlagengeneratorstator (10) nach einem der Ansprüche 1 bis 7, der insbesondere nach einem Verfahren der Ansprüche 8 bis 13 hergestellt ist.
